Europäisches Patentamt

European Patent Office

Office européen des brevets

(19)

(11) Numéro de publication : **0 363 290 B1**

(12)

# FASCICULE DE BREVET EUROPEEN

(45) Date de publication du fascicule du brevet :
**19.11.92 Bulletin 92/47**

(51) Int. Cl.⁵ : **A01K 89/00**

(21) Numéro de dépôt : **89420376.9**

(22) Date de dépôt : **04.10.89**

(54) **Manivelle pour moulinet de pêche.**

(30) Priorité : **07.10.88 FR 8813453**

(43) Date de publication de la demande :
**11.04.90 Bulletin 90/15**

(45) Mention de la délivrance du brevet :
**19.11.92 Bulletin 92/47**

(84) Etats contractants désignés :
**FR GB IT**

(56) Documents cités :
**FR-A- 2 487 637**

(73) Titulaire : **MITCHELL SPORTS**
**30, rue de Messy**
**F-74300 Cluses (FR)**

(72) Inventeur : **Bernard, Jean**
**134 avenue des Lacs Scionzier**
**F-74300 Cluses (FR)**
Inventeur : **Ruin, Jean**
**En Bud Thyez**
**F-74300 Cluses (FR)**

(74) Mandataire : **de Beaumont, Michel**
**Cabinet Poncet 7, chemin de Tillier B.P. 317**
**F-74008 Annecy Cédex (FR)**

EP 0 363 290 B1

## Description

La présente invention concerne les moulinets de pêche comportant un mécanisme de récupération du fil de pêche.

Dans la plupart des moulinets actuellement utilisés sur des cannes à pêche, le fil de pêche en nylon est bobiné sur une bobine axiale, c'est à dire une bobine dont l'axe est sensiblement parallèle à l'axe longitudinal de la canne à pêche. Lors des manoeuvres de récupération de fil, le fil est enroulé progressivement sur la bobine par un récupérateur animé d'un mouvement de rotation d'axe longitudinal autour de la bobine et entraîné par une manivelle dont l'extrémité forme poignée. Pour être facilement accessible et manipulable, la manivelle comporte un bras radial dont une première extrémité porte l'arbre de rotation principal de liaison de manivelle sur le corps de moulinet, et dont une seconde extrémité porte une poignée montée rotative sur le bras. L'arbre de rotation principal de manivelle est sensiblement perpendiculaire à l'axe longitudinal principal de moulinet, ou axe longitudinal de la canne à pêche. La poignée est rotative autour d'une vis formant arbre de rotation axial parallèle à l'arbre de rotation principal de manivelle. Il en résulte que la poignée occupe une position fortement proéminente sur le côté de la canne à pêche et du moulinet, ce qui la rend facilement accessible et manipulable.

Dans les moulinets connus, tels que le moulinet représenté dans le document FR-A-2 487 637, la poignée est formée d'un corps rigide, de forme générale parallélépipédique applatie, muni d'un alésage traversant dans lequel est insérée à faible jeu une vis dont la tête porte sur la face externe du corps de poignée et dont l'extrémité de tige est vissée à l'extrémité du bras radial de manivelle. La poignée comporte une face d'appui coopérant par glissement à faible jeu avec l'extrémité du bras de manivelle. Pour permettre une rotation aisée et douce de la manivelle, pour limiter les frottements, et pour avoir une fabrication économique, un jeu suffisant doit être laissé entre la poignée et l'extrémité correspondante du bras de manivelle. Il en résulte l'apparition d'une gorge à l'interface entre la poignée et le bras de manivelle.

Par sa position fortement proéminente, la manivelle de moulinet de pêche, et notamment sa poignée, sont susceptibles de subir des chocs relativement violents lors de l'utilisation du matériel de pêche. Ces chocs violents et répétés conduisent le plus souvent à une torsion ou à une rupture de la vis reliant la poignée au bras de manivelle. Les chocs conduisent également à détériorer la surface externe de poignée, surface qui doit être dans un état approprié pour éviter le glissement des doigts de l'utilisateur. Il en résulte une détérioration inacceptable des poignées et des bras de manivelle.

Par ailleurs, la gorge annulaire existant entre la manivelle et la poignée conduit à des problèmes spécifiques apparaissant du fait de l'utilisation des moulinets avec un fil à pêche, fil généralement de faible section : lors de certaines phases d'utilisation du matériel, le fil à pêche sortant de la bobine tend à s'enrouler dans la gorge entre la poignée et le bras de manivelle, et à se coincer dans cette gorge. Ce risque de coincement et d'enroulement constitue un inconvénient grave et inacceptable.

La présente invention a notamment pour objet d'éviter les inconvénients mentionnés ci-dessus, en prévoyant des moyens permettant d'absorber les chocs subits par les poignées et bras de manivelle dans un moulinet de pêche. Une telle absorbtion de chocs limite les contraintes subies par la vis de liaison entre la poignée de manivelle et le bras, et les contraintes subies par le bras de manivelle lui-même et par la poignée elle-même.

Un autre avantage de la présente invention réside dans le fait que la poignée elle-même est protégée par un organe interchangeable formant sa surface superficielle, de sorte que les dégradations éventuelles de la surface de préhension de manivelle peuvent être annulées en changeant l'élément superficiel, sans avoir à changer la manivelle toute entière.

Selon un mode de réalisation avantageux, le moulinet selon l'invention est muni d'une liaison particulière entre la poignée et le bras de manivelle, cette liaison permettant d'éliminer la présence de la gorge annulaire dans laquelle vient s'enrouler le fil de pêche dans les moulinets connus.

Pour atteindre ces objets ainsi que d'autres, le moulinet de pêche selon la présente invention comprend une manivelle comportant de façon connue une poignée et un bras de manivelle, le bras comportant une portion axiale formant arbre de rotation de poignée traversant un alésage de poignée ; selon l'invention, la poignée comporte un corps rigide percé de l'alésage traversant qui débouche sur la face d'extrémité de poignée ; le corps rigide est recouvert d'une capote en élastomère recouvrant simultanément les faces périphériques et la face d'extrémité du corps rigide. De cette manière, la poignée a des propriétés d'amortissement mécanique aux chocs, elle présente une surface de préhension déformable et adhérante, et la capote s'oppose en outre à la pénétration de corps étrangers dans l'alésage traversant de poignée.

Selon un mode de réalisation, la surface périphérique du corps rigide de poignée comporte des aspérités coopérant avec la surface interne de capote pour éviter l'arrachement intempestif de ladite capote. La capote est adaptée sous tension sur le corps rigide et est retenue sur le corps par l'effet de son élasticité, de sorte qu'elle est facilement interchangeable.

Selon un mode de réalisation avantageux, la seconde extrémité de bras de manivelle comporte une portion axiale externe prolongée par la poignée, et de section transversale SE inférieure à la section SP de poignée, le bras comportant un épaulement limitant le déplacement relatif axial de la poignée en direction du bras ; selon l'invention, la portion axiale externe de bras est prolongée par une portion de bras axiale interne à la poignée, de section SI se raccordant par sa première extrémité en bout de portion axiale externe ledit épaulement limitant le déplacement relatif axial de la poignée en direction du bras est formé par la seconde extrémité de portion axiale interne ; la portion axiale interne est logée dans un alésage d'extrémité de poignée ; la section SE de portion axiale externe est inférieure ou égale à la section SI de portion axiale interne. De cette manière, l'épaulement de bras occupe une position intermédiaire à l'intérieur de la poignée, de sorte que le fil à pêche ne risque pas de s'enrouler et de se coincer entre l'épaulement de bras et la poignée.

D'autres objets, caractéristiques et avantages de la présente invention, ressortiront de la description suivante de modes de réalisation particuliers, faite en relation avec les figures jointes, parmi lesquelles :

- la figure 1 représente en vue de face en coupe une manivelle de moulinet de pêche connue ;
- la figure 2 représente la manivelle de la figure 1 en vue de dessus ;
- la figure 3 représente en vue de face en coupe une manivelle de moulinet selon la présente invention, dans un premier mode de réalisation ;
- la figure 4 représente la manivelle de la figure 3 en vue de dessus ;
- la figure 5 représente en vue de face en coupe une manivelle de moulinet de pêche selon la présente invention dans un second mode de réalisation ;
- la figure 6 représente en vue de face en coupe une manivelle de moulinet de pêche selon la présente invention dans un troisième mode de réalisation ;
- la figure 7 est une coupe transversale de la poignée selon le plan A de la figure 6 ; et
- la figure 8 représente en vue de dessus en coupe une manivelle de moulinet de pêche selon l'invention dans un quatrième mode de réalisation.

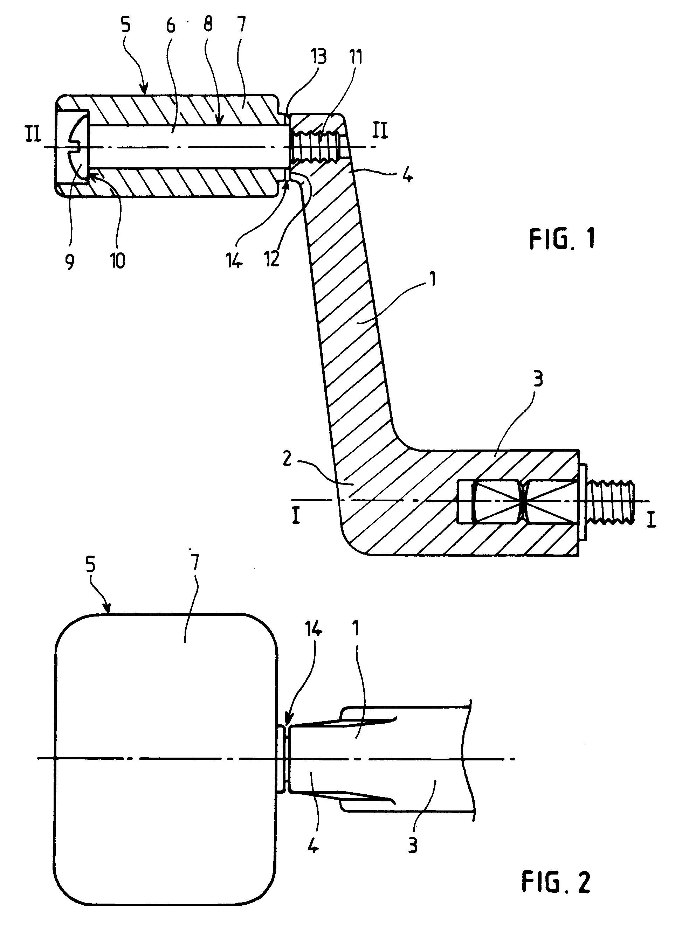

Les figures 1 et 2 sont destinées à mieux faire comprendre les problèmes mentionnés précédemment, qui apparaissent dans les moulinets de pêche connus.

Ces figures illustrent une forme de manivelle de moulinet de pêche connue, comportant un bras radial 1 dont une première extrémité 2 porte l'arbre de rotation principal 3 de manivelle, et dont la seconde extrémité 4 porte une poignée 5 montée rotative sur le bras selon un arbre de rotation axial de poignée. L'arbre de rotation principal 3 de manivelle se développe selon une direction I - I généralement perpendiculaire à la direction longitudinale de bobine de moulinet et de canne à pêche, et est relié aux organes habituels de bobinage du fil à pêche sur la bobine de moulinet. L'arbre de rotation principal 3 de manivelle tourillonne donc dans le corps de moulinet, non représenté sur les figures, de manière connue en soi.

La poignée 5 est rotative autour d'un axe II - II généralement parallèle à la direction I - I de l'arbre de rotation principal de manivelle, ou direction axiale.

La poignée 5 est généralement reliée au bras radial 1 par une vis épaulée 6 : la poignée 5 est constituée d'un corps rigide 7 percé de part en part par un alésage axial 8 ; la vis épaulée 6 traverse à faible jeu l'alésage 8, et sa tête 9 porte contre une première facette d'extrémité 10 du corps rigide 7 de manivelle ; l'extrémité 11 de la tige de vis 6 est vissée dans un alésage taraudé correspondant de la seconde extrémité 4 de bras radial 1 ; l'épaulement intermédiaire 12 de la vis 6 porte contre une facette 13 de bras radial 1. Un jeu suffisant est ménagé pour permettre une légère translation axiale du corps 7 de poignée sur la tige de vis épaulée 6, entre la tête 9 et la facette de bras radial 13. On a représenté, sur les figures 1 et 2, l'apparition d'une gorge annulaire périphérique 14 entre le corps rigide de poignée et la seconde extrémité 4 de bras radial 1. Le fil de pêche, dans certaines phases d'utilisation du matériel, risque de s'enrouler et de se coincer dans la gorge 14.

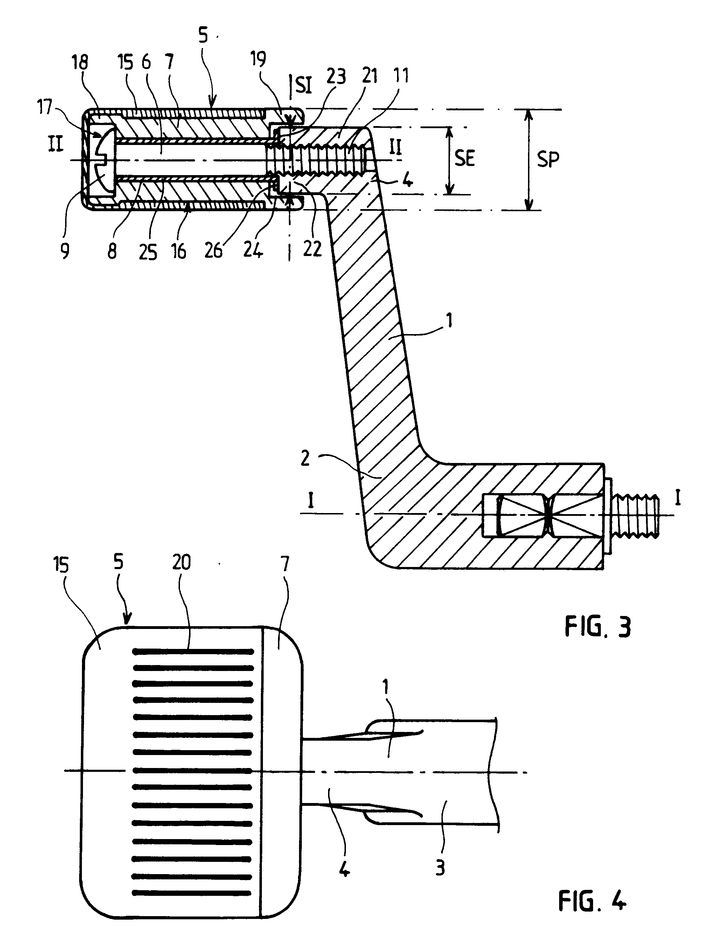

Dans le mode de réalisation représenté sur les figures 3 et 4, le moulinet selon l'invention comporte également les éléments principaux des manivelles de moulinet connues représentées sur les figures 1 et 2, éléments principaux qui ont été repris avec les mêmes références numériques, et notamment : bras radial 1, arbre de rotation principal de manivelle 3, poignée 5, corps rigide 7, vis de liaison 6.

Toutefois, dans ce mode de réalisation, le corps rigide 7 de poignée est interne, et est recouvert d'une capote 15 en élastomère recouvrant simultanément les faces périphériques 16 et la face d'extrémité 17 du corps rigide 7. Lors des chutes, la capote 15 en matériau élastique forme une couche protectrice amortissant les chocs.

On comprend que la capote 15, qui recouvre la face périphérique 16 du corps rigide 7, forme par elle-même la surface de préhension de la manivelle. Il en résulte que ladite surface de préhension est déformable et adhérente, ce qui facilite sa manipulation et la rend particulièrement agréable. La capote 15 s'oppose en outre à la pénétration de corps étrangers dans l'alésage 8 de poignée, car elle forme une paroi continue et étanche recouvrant la zone d'extrémité occupée par la tête 9 de vis.

La surface périphérique 16 du corps rigide 7 de poignée comporte avantageusement des aspérités telles que l'excroissance d'extrémité 18 et l'excroissance opposée 19, coopérant avec la surface interne de capote 15 pour éviter l'arrachement intempestif de ladite capote. La capote est adaptée sous tension sur le corps rigide 7, et est retenue sur le corps par l'effet de son élasticité. La capote 15 est ainsi facilement interchangeable. Elle comporte, sur sa face externe périphérique, des aspérités schématiquement représentées par des lignes axiales 20 sur la figure 4, qui augmentent l'adhérence entre la poignée et les doigts de l'utilisateur. A la fin d'une saison de pêche, si lesdites aspérités 20 sont usées, il est possible de remédier facilement à ce défaut en changeant la capote 15.

Selon ce mode de réalisation représenté sur les figures 3 et 4, la liaison entre la poignée 5 et le bras radial 1 s'effectue selon une structure nouvelle et avantageuse. La seconde extrémité 4 de bras radial 1 comporte une portion axiale externe 21, s'étendant parallèlement à l'axe II - II de manivelle, laquelle portion axiale externe 21 est prolongée par la poignée. La portion axiale externe 21 présente une section transversale SE inférieure à la section SP de poignée. La portion axiale externe 21 de bras est prolongée par une portion axiale interne de bras 22, de section SI, et se raccordant par sa première extrémité en bout de portion axiale externe 21. La seconde extrémité 23 de portion axiale interne 22 forme un épaulement limitant le déplacement axial de la poignée 5 en direction du bras radial 1. La portion axiale interne 22 est logée dans un alésage 24 d'extrémité de poignée. La section SE de portion axiale externe 21 est inférieure ou égale à la section SI de portion axiale interne 22 de bras. De cette manière, l'épaulement formé par la seconde extrémité 23 de portion axiale interne, qui limite le déplacement axial de poignée en direction du bras radial, occupe une position intermédiaire à l'intérieur de la poignée, c'est-à-dire une position non apparente et non accessible par le fil de pêche. Il en résulte que le fil de pêche ne rique pas de s'enrouler et de se coincer entre ledit épaulement 23 et la poignée.

Dans le mode de réalisation représenté, la liaison entre la poignée 5 et le bras radial 1 est également assurée par une vis axiale 6, dont la tête 9 limite le déplacement axial de la poignée à l'écart du bras 1, et dont l'extrémité 11 est vissée dans un alésage taraudé de la seconde extrémité 4 de bras radial. Dans ce mode de réalisation, la vis 6 ne comporte pas d'épaulement intermédiaire, mais coopère avec une douille épaulée 25. La douille 25 comprend un corps tubulaire, traversé par la tige de vis 6, dont la première extrémité est en appui sur la tête 9 de vis, et dont la seconde extrémité comporte un épaulement de douille 26 formant surface d'appui contre la seconde extrémité 23 de la portion axiale 22 de bras radial 1. La douille 25 limite le vissage de la vis 6 dans l'alésage taraudé du bras radial. La présence de l'épaulement de douille 26, définissant une surface d'appui plus importante, limite l'écrasement de la matière formant l'extrémité de bras radial lors du serrage de la vis 6, et contribue à la résistance aux chocs. Ainsi, la douille 25 est en appui d'une part sur la tête 9 de vis et d'autre part sur l'épaulement 23 d'extrémité de bras radial 1. Dans ce mode de réalisation, on laisse un faible jeu pour permettre un léger déplacement axial du corps rigide 7 de poignée sur la douille 25, entre la tête 9 de vis et l'épaulement 26 de douille.

De préférence, la portion axiale interne 22 de bras radial, ou portion pénétrant dans l'alésage 24 de poignée, doit avoir une longueur égale à plusieurs fois le diamètre du fil de pêche.

De même, de préférence, la portion axiale externe 21 de bras radial doit avoir une longueur égale à plusieurs fois le diamètre du fil de pêche. On évite ainsi les coincements du fil de pêche entre la poignée et le bras radial.

On remarquera que la structure de liaison entre la poignée 5 et le bras radial 1 telle que représentée sur la figure 3 conduit à augmenter sensiblement la longueur de la portion de bras radial 1 dans laquelle pénètre la vis 6. Cette partie est en effet constituée d'une part par la portion axiale externe 21 de bras radial, et également par la portion axiale interne 22 du bras radial. Il en résulte une augmentation sensible de la résistance mécanique de cette liaison.

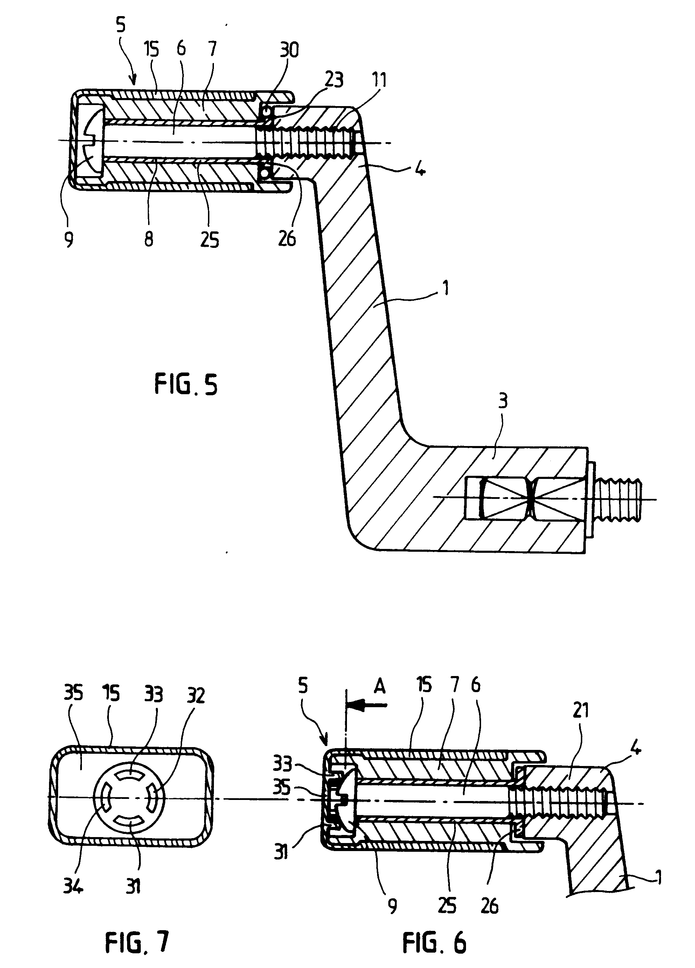

Dans les modes de réalisations représentés sur les figures 5 à 7, la liaison entre la poignée 5 et le bras radial 1 comporte les mêmes éléments que dans le mode de réalisation de la figure 3, mais comporte en outre des moyens élastiques interposés entre la portion axiale de bras et la poignée, pour repousser la poignée en appui contre la base de la tête 9 de vis, à l'opposé du bras radial.

Dans le mode de réalisation de la figure 5, les moyens élastiques comprennent un anneau torique 30 en élastomère, logé entre la seconde extrémité 23 de portion axiale interne 22 de bras formant épaulement, et entre le corps rigide 7 de poignée. Le serrage de la vis 6 provoque un léger écrasement de l'anneau torique 30, qui fait ainsi office d'organe élastique repoussant la poignée 5 contre la tête de vis 9. On remarquera que l'anneau torique 30 fait simultanément office de joint d'étanchéité, limitant la pénétration d'organes étrangers dans la poignée, à l'intérieur de l'alésage 8. De préférence, l'anneau torique 30 est disposé en périphérie de l'épaulement 26 de la douille 25, de sorte que ledit épaulement 26 assure le centrage de l'anneau torique 30 et limite son écrasement.

Dans le mode de réalisation des figures 6 et 7, les moyens élastiques comprennent une ou plusieurs languettes axiales, par exemple quatre languettes 31, 32, 33 et 34, dépassant de la face interne de paroi d'extrémité 35 de la capote 15, et conformées pour s'appuyer élastiquement sur la tête 9 de vis. Les languettes élastiques 31 - 34 assurent un rattrapage de jeu dans un sens préférentiel, évitant l'effet de grelot. De plus, en cas de choc latéral, la déformation supplémentaire engendrée absorbe l'énergie.

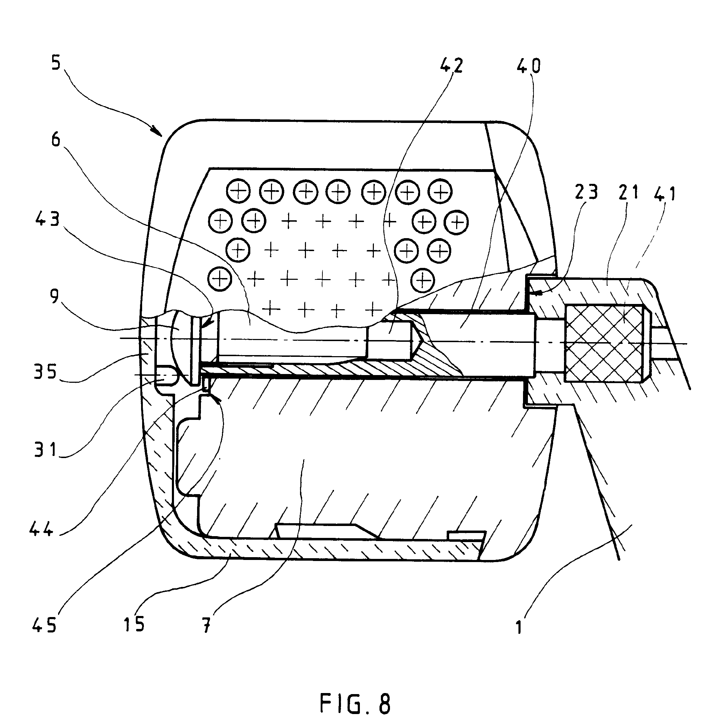

Dans la variante représentée sur la figure 8, l'arbre de rotation de poignée est constitué d'un arbre creux 40, noyé à sa première extrémité 41 dans le bras 1 de manivelle, et comportant à sa seconde extrémité un trou borgne 42 taraudé dans lequel vient se visser une vis 6 à tête 9 lisse bombée. Les surfaces de liaison entre la portion axiale 21 du bras radial et le corps de poignée sont similaires à celles des modes de réalisation précédents, c'est-à-dire qu'elles comportent une portion axiale externe 21, une portion axiale interne 22, une seconde extrémité 23 de portion axiale interne formant épaulement limitant le déplacement axial de la poignée 5 en direction du bras radial 1. La base 43 de la tête 9 de vis limite le déplacement axial de la poignée 5 à l'écart du bras 1. Le jeu axial de la poignée 5 entre la base 43 de la tête 9 de vis et l'épaulement 23 est ajusté par le moyen d'une rondelle 44 d'épaisseur appropriée insérée entre la base 43 de la tête 9 de vis et la face frontale correspondante 45 du corps rigide 7 de poignée. Une languette élastique 31, éventuellement associée à d'autres languettes élastiques similaires, dépasse de la face interne de paroi d'extrémité 35 de la capote 15 recouvrant les faces périphériques et la face d'extrémité du corps rigide 7. La languette élastique 31 vient porter sur la face d'extrémité bombée de la tête 9 lisse de vis, pour repousser la poignée 5 à l'écart du bras 1. Cette variante assure également le rattrapage de jeu dans le sens préférentiel, évitant l'effet de grelot, et permet un réglage précis du jeu axial par un choix approprié de la rondelle 44.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche comprenant une manivelle pour l'actionnement des organes de bobinage du fil de pêche, la manivelle comportant un bras radial (1) dont une première extrémité (2) porte l'arbre de rotation principal (3) de liaison de manivelle sur le corps de moulinet, et dont une seconde extrémité (4) porte une poignée (5) montée rotative sur le bras selon un arbre de rotation axial (6) parallèle à l'arbre de rotation principal (3) de manivelle, le bras radial (1) comportant une portion axiale (6) formant arbre de rotation de poignée et insérée dans un alésage traversant (8) de la poignée,
la poignée (5) comporte un corps rigide (7) percé de l'alésage traversant (8) qui débouche sur ses faces d'extrémité, caractérisé en ce que :
- le corps rigide (7) est recouvert d'une capote (15) en élastomère recouvrant simultanément les faces périphériques (16) et la face d'extrémité (17) du corps rigide (7),
de sorte que la poignée (5) présente des propriétés d'amortissement mécanique aux chocs, présente une surface de préhension déformable et adhérente, la capote (15) s'opposant en outre à la pénétration de corps étrangers dans l'alésage (8) traversant de poignée.

2. Moulinet selon la revendication 1, caractérisé en ce que la surface périphérique (16) du corps rigide (7) de poignée comporte des aspérités (18, 19) coopérant avec la surface interne de capote (15) pour éviter l'arrachement intempestif de la capote, la capote étant adaptée sous tension sur le corps et étant retenue sur le corps par l'effet de son élasticité, de sorte que la capote est facilement interchangeable.

3. Moulinet selon l'une des revendications 1 ou 2, caractérisé en ce que :
- la seconde extrémité (4) de bras radial comporte une portion axiale externe (21) prolongée par la poignée (5), et de section transversale (SE) inférieure à la section (SP) de poignée, le bras radial (1) comportant un épaulement (23) limitant le déplacement relatif axial de la poignée en direction du bras,
- la portion axiale externe (21) de bras est prolongée par une portion axiale interne (22) de bras, de section (SI), se raccordant par sa première extrémité en bout de la portion axiale externe (21),
- l'épaulement (23) est formé par la second extrémité de portion axiale interne (22) de bras,
- la portion axiale interne (22) de bras est logée dans un alésage (24) d'extrémité de poignée,
- la section (SE) de portion axiale externe (21) est inférieure ou égale à la section (SI) de portion axiale interne (22) de bras,
de sorte que l'épaulement de bras (23) occupe une position intermédiaire à l'intérieur de la poignée, et que le fil de pêche ne risque pas de s'enrouler et de se coincer entre l'épaulement de bras (23) et la poignée (5).

4. Moulinet selon la revendication 3, caractérisé en ce que la longueur de portion axiale interne (22) est égale à plusieurs fois le diamètre du fil de pêche.

5. Moulinet selon l'une des revendications 3 ou 4, caractérisé en ce que la longueur de portion axiale externe (21) de bras est égale à plusieurs fois le diamètre du fil de pêche.

6. Moulinet selon l'une quelconque des revendications 1 à 5, caractérisé en ce que des moyens élastiques (30) repoussent la poignée (5) en appui axial à l'opposé du bras (1).

7. Moulinet selon la revendication 6, caractérisé en ce que les moyens élastiques comprennent un anneau torique (30) en élastomère, inséré entre l'épaulement (23) de bras et la poignée (5), faisant à la fois office d'organe élastique et de joint d'étanchéité.

8. Moulinet selon la revendication 6, caractérisé en ce que les moyens élastiques comprennent au moins une languette élastique (31 - 34) dépassant de la face interne de paroi d'extrémité (35) de la capote (15), conformée pour s'appuyer élastiquement sur la tête (9) lisse d'une vis axiale (6) solidaire du bras radial (1), le débattement axial de poignée étant limité par la tête (9) de vis et par l'épaulement (23) d'extrémité de portion axiale de bras radial (1), le jeu axial étant ajusté par le moyen d'une rondelle (44) d'épaisseur appropriée insérée entre la base de la tête de vis et la face frontale (45) du corps rigide de poignée.

9. Moulinet selon l'une quelconque des revendications 1 à 7, caractérisé en ce que la poignée (5) est fixée sur le bras radial (1) au moyen d'une vis (6) traversant une douille (25), la douille (25) étant en appui d'une part sur la tête (9) de la vis et, d'autre part sur l'épaulement (23) d'extrémité de portion axiale de bras radial (1).

10. Moulinet selon la revendication 9, caractérisé en ce que la douille (25) comprend un épaulement de douille (26) en appui contre l'épaulement (23) d'extrémité de bras radial (1), ledit épaulement de douille (26) assurant le centrage de l'anneau torique (30) et limitant son écrasement lors du serrage de la vis (6).

**Claims**

1. Fishing reel comprising a crank-handle for actuating members for reeling the fishing line, the crank-handle comprising a radial arm (1) one end (2) of which carries the main rotational shaft (3) connecting the crank-handle to the reel body, and a second end (4) of which carries a handle (5) mounted for rotation on the arm about an axial rotational shaft (6) parallel to the main rotational shaft (3) of the crank-handle, the radial arm (1) comprising an axial portion (6) forming a rotational shaft for the handle and inserted in a throughbore (8) in the handle, said handle (5) comprises a rigid body (7) pierced with the throughbore (8) which opens on to its end faces, characterized in that :
   - the rigid body (7) is covered by a sleeve (15) made from elastomer, covering simultaneously the peripheral faces (16) and the end face (17) of the rigid body (7),
   so that the handle (5) has properties for mechanically absorbing the shocks, with a deformable and adherent gripping surface, the sleeve (15) further opposing the penetration of foreign bodies into the throughbore (8) of the handle.

2. Fishing reel according to claim 1, characterized in that the peripheral surface (16) of the rigid handle body (7) comprises rough portions (18, 19) cooperating with the internal surface of sleeve (15) for preventing accidental wrenching off of the sleeve, the sleeve being fitted under tension on the body and being retained on the body by the effect of its elasticity, so that the sleeve is readily interchangeable.

3. Fishing reel according to claims 1 or 2, characterized in that :
   - the second end (4) of the radial arm comprises an external axial portion (21) extended by the handle (5) and of a cross-section (SE) less than the cross-section (SP) of the handle, the radial arm (1) comprising a shoulder (23) limiting the relative axial movement of the handle in the direction of the arm,
   - the external axial portion (21) of the arm is extended by an internal axial arm portion (22), of a cross-section (SI), connected by its first end to the end of the external axial portion (21),
   - the shoulder (23) is formed by the second internal axial portion end (22) of the arm,
   - the internal axial portion (22) of the arm is housed in an end bore (24) of the handle,
   - the cross-section (SE) of the external axial portion (21) is less than or equal to the cross-section (SI) of the internal axial portion (22) of the arm,
   so that the arm shoulder (23) occupies an intermediate position inside the handle, and so that there is no danger of the fishing line being wound and jammed between the shoulder of the arm (23) and the handle (5).

4. Fishing reel according to claim 3, characterized in that the length of the internal axial portion (22) is equal to several times the diameter of the fishing line.

5. Fishing reel according to claims 3 or 4, characterized in that the length of the external axial portion (21) of the arm is equal to several times the diameter of the fishing line.

6

6. Fishing reel according to any one of claims 1 to 5, characterized in that resilient means (30) urge the handle (5) axially away from the arm (1).

7. Fishing reel according to claim 6, characterized in that the resilient means comprise an elastomer O-ring (30) inserted between the arm shoulder (23) and the handle (5), serving as resilient member and seal.

8. Fishing reel according to claim 6, characterized in that the resilient means comprise at least one resilient tongue (31-34) projecting from the internal face of the end wall (35) of the sleeve (15), shaped so as to bear resiliently on the smooth head (9) of an axial screw (6) fast with the radial arm (1), the axial movement of the handle being limited by the screw head (9) and by the end shoulder (23) of the axial portion of the radial arm (1), the axial clearance being adjusted by means of a washer (44) of appropriate thickness inserted between the base of the screw head and the front face (45) of the rigid handle body.

9. Fishing reel according to any one of claims 1 to 7, characterized in that the handle (5) is fixed on the radial arm (1) by means of a screw (6) passing through a socket (25), the socket (25) bearing both on the head (9) of the screw and on the end shoulder (23) of the axial portion of the radial arm (1).

10. Fishing reel according to claim 9, characterized in that the socket (25) comprises a socket shoulder (26) bearing against the end shoulder (23) of the radial arm (1), the socket shoulder (26) providing centering of the O-ring (30) and limiting crushing thereof during tightening of the screw (6).

**Patentansprüche**

1. Angelrolle, die eine Kurbel zur Betätigung von Wicklungsorganen der Angelschnur aufweist, wobei die Kurbel einen Radialarm (1) umfaßt, von welchem ein erstes Ende (2) die Hauptdrehachse (3) der Verbindung der Kurbel mit dem Körper der Angelrolle trägt und von welchem ein zweites Ende (4) einen Griff (5) trägt, der an dem Arm um eine axiale Drehachse (6) drehbar gelagert ist, die parallel zu der Hauptdrehachse (3) der Kurbel verläuft, wobei der Radialarm (1) einen axialen Abschnitt (6) umfaßt, welcher die Drehachse des Griffes bildet und in eine Zylinderbohrung (8) eingefügt ist, welche den Griff durchquert, wobei der Griff (5) einen starren Körper (7) aufweist, der von der durchquerenden Zylinderbohrung (8) durchstoßen ist, die an seinen Endflächen mündet, dadurch gekennzeichnet, daß
- der starre Körper (7) mit einem Mantel (15) aus einem Elastomeren abgedeckt ist, der gleichzeitig die Umfangsflächen (16) und die Endfläche (17) des starren Körpers (7) abdeckt, derart, daß der Griff (5) mechanische Dämpfungseigenschaften gegenüber Stößen und eine verformbare und anhaftende Greiffläche ergibt und der Mantel (15) außerdem das Eindringen von Fremdkörpern in die Zylinderbohrung (8) verhindert, die den Griff durchquert.

2. Angelrolle nach Anspruch 1, dadurch gekennzeichnet, daß die Umfangsfläche (16) des starren Körpers (7) des Griffes Unebenheiten (18, 19) aufweist, die mit der Innenfläche des Mantels (15) zusammenwirken, um ein unabsichtliches Abziehen des Mantels zu verhindern, wobei der Mantel unter Spannung auf den Körper gepaßt ist und an dem Körper durch die Wirkung seiner Elastizität gehalten wird, derart, daß der Mantel leicht austauschbar ist.

3. Angelrolle nach einem der Ansprüche 1 oder 2, dadurch gekennzeichnet, daß
- das zweite Ende (4) des Radialarms einen äußeren axialen Abschnitt (21) aufweist, der durch den Griff (5) verlängert ist und einen Querschnitt (SE) kleiner als der Querschnitt (SP) des Griffes hat, wobei der Radialarm (1) eine Schulter (23) aufweist, welche die relative axiale Verschiebung des Griffs in Richtung des Arms begrenzt,
- der äußere axiale Abschnitt (21) des Arms durch einen inneren axialen Abschnitt (22) des Arms verlängert ist, von welchem der Querschnitt (SI) an seinem ersten Ende mit dem äußeren axialen Abschnitt (21) verbunden ist,
- die Schulter (23) durch das zweite Ende des inneren axialen Abschnitts (22) des Arms ausgebildet ist,
- der innere axiale Abschnitt (22) des Arms in einer Zylinderbohrung (24) des Griffendes angeordnet ist,
- der Querschnitt (SE) des äußeren axialen Abschnitts (21) kleiner oder gleich dem Querschnitt (SI) des inneren axialen Abschnitts (22) des Arms ist, derart, daß die Schulter (23) des Arms eine Zwischenposition im Innern des Griffs einnimmt und die Angelschnur nicht Gefahr läuft, sich abzuwickeln und sich zwischen der Schulter (23) des Arms und dem Griff (5) festzuklemmen.

4. Angelrolle nach Anspruch 3, dadurch gekennzeichnet, daß die Länge des inneren axialen Abschnitts (22) gleich einem Vielfachen des Durchmessers der Angelschnur ist.

5. Angelrolle nach Anspruch 3 oder 4, dadurch gekennzeichnet, daß die Länge des äußeren axialen Abschnitts (21) des Arms gleich einem Vielfachen des Durchmessers der Angelschnur ist.

6. Angelrolle nach einem der Ansprüche 1 bis 5, dadurch gekennzeichnet, daß elastische Mittel (30) den Griff (5) in Bezug auf den Arm (1) axial wegdrücken.

7. Angelrolle nach Anspruch 6, dadurch gekennzeichnet, daß die elastischen Mittel einen kreisförmigen Ring (30) aus einem Elastomeren umfassen, der zwischen der Schulter (23) des Arms und dem Griff (5) eingefügt ist und sowohl als ein elastisches Organ wie auch als ein Dichtungsteil wirkt.

8. Angelrolle nach Anspruch 6, dadurch gekennzeichnet, daß die elastischen Mittel wenigstens eine elastische Zunge (31 bis 34) umfassen, die von der Innenfläche der Außenwand (35) des Mantels (15) absteht und dafür ausgebildet ist, sich elastisch an dem glatten Kopf (9) einer an dem Radialarm (1) befestigten axialen Schraube (6) abzustützen, wobei die axiale Abfederung des Griffes durch den Kopf (9) der Schraube und durch die Schulter (23) des Endes des axialen Abschnitts des Radialarms (1) begrenzt ist und das axiale Spiel mittels einer Unterlegscheibe (44) geeigneter Dicke eingestellt ist, die zwischen die Basis des Kopfes der Schraube und die Vorderfläche (45) des starren Körpers des Griffs eingefügt ist.

9. Angelrolle nach einem der Ansprüche 1 bis 7, dadurch gekennzeichnet, daß der Griff (5) an dem Radialarm (1) mittels einer Schraube (6) befestigt ist, die eine Hülse (25) durchquert, wobei die Hülse (25) sich einerseits an dem Kopf (9) der Schraube und andererseits an der Schulter (23) des Endes des axialen Abschnitts des Radialarms (1) abstützt.

10. Angelrolle nach Anspruch 9, dadurch gekennzeichnet, daß die Hülse (25) eine Hülsenschulter (26) zur Abstützung gegen die Endschulter (23) des Radialarms (1) aufweist, wobei die Hülsenschulter (26) die Zentrierung des kreisförmigen Rings (30) sichert und sein Zusammendrücken beim Anziehen der Schraube (6) begrenzt.

FIG. 1

FIG. 2

FIG. 3

FIG. 4

FIG. 5

FIG. 7

FIG. 6

FIG. 8